# EUROPEAN PATENT SPECIFICATION

(11) **EP 2 800 195 B1**
(45) Date of publication and mention of the grant of the patent: **14.09.2016**
(21) Application number: 14158416.9
(22) Date of filing: 07.03.2014
(51) Int. Cl.: H01M 10/44, H02J 7/00

(54) **Smart charging algorithm of lithium ion battery**
Intelligenter Ladealgorithmus einer Lithiumionenbatterie
Algorithme de charge intelligent de batterie lithium-ion

(30) Priority: 30.04.2013 US 201313873258
(43) Date of publication of application: 05.11.2014
(73) Proprietor: Zhuhai Zhi Li Battery Co., Ltd., Zhuhai Guangdong 519002 (CN)
(72) Inventor: Wang, Fang, 519002 Zhuhai (CN); Sun, Fajiong, 519002 Zhuhai (CN)
(74) Representative: Sun, Yiming

(56) References cited:
- EP-A2- 1 538 724
- US-A1- 2002 060 554
- US-A1- 2004 124 810
- US-A1- 2011 133 697
- US-B1- 6 337 560

## Description

### FIELD OF INVENTION

This invention relates to the charging algorithm or method for rechargeable lithium-ion battery, to have it has longest possible cycle life. More particularly, such charging algorithm is applied to those daily used and daily charged products, such as a rechargeable hearing aid system, as well as other products like mobile phones, wireless earphones, or other body ware small electronic devices.

### BACKGROUND OF THE INVENTION

Rechargeable lithium ion batteries have been a great success in last two decades for powering consumer products as well as electric vehicles or power grid storage. The cycle life can be from 100 cycles for extra-high power model helicopter batteries to 10000 cycles for power grid storage. For common daily used consumer products like cell phones and earphones, such batteries usually have cycle life of 300 to 500 cycles, by well-known CC-CV charging (Constant-current, constant-voltage).

The cycle life of Li-ion batteries is effected by many factors like materials, battery design, charge-discharge conditions, etc. Maximum charging voltage or charging termination voltage is one of them. For example, to charge the battery to 4.1V will increase the cycle life twice as long as charge to 4.2V. The reason is believed that the batteries at lower voltage have less chemical and electrochemical side reactions and less material decay, than at higher voltage. In simple words, the battery is just less stressed at lower voltage.

Some devices use such lower maximum charging voltage or CV voltage in CC-CV charging to extend the battery life, say, at 4.1V CC-CV charging all through the battery cycle life, while it has to sacrifice about 10% of the capacity that could be used if charged to 4.2V. To elevate the charging voltage to 4.2V can make that 10% to be used but as described above, the cycle life is significantly shorter than to 4.1 V, though still more than 300 cycles which is an industry standard.

Lower voltage charging is usually not a consideration for many of the electronic devices, such as cell phone. They need the possible maximum charging every and each day for longest using time, so they all charged to whatever possible highest voltage i.e. 4.2V or even 4.35V for the latest technology batteries, for maximum capacity. Then they will be recharged daily or by several days interval, and they would be replaced in typically 2 years so total cycle life at about 500 cycles is acceptable.

For the emerging rechargeable hearing aid systems using lithium ion batteries, cycle life is very important because usually the battery is required for 3-5 years of use same as the life of hearing aid. Also the hearing aid requires a very small battery that usually could only be used for one day, or even if a higher capacity battery is available, the hearing aid designers then will only use the smallest-one-day-use battery, to have the hearing aid itself to be smallest, for the best customer satisfactory. So it means, the battery must be charged on a daily basis and at least 1000-1500 cycles is required. This is very high demand and besides the materials and battery design, charging algorithm must also be different than prior arts to contribute to such long cycle life.

US 6337560 B1 describes methods and systems for a maintenance charging of lithium-based battery cells.

US 2011/0133697 A1 describes a battery pack that can change the maximum charging voltage for a rechargeable battery to select a high capacity mode in which the fully-charged capacity of a rechargeable battery can be higher or a long life mode in which the cycle life of the re-chargeable battery can be longer.

US 2004/0124810 A1 describes a method of charging a battery of a portable communication device. Such batteries are typically charged by using the CC-CV-Method, where an appropriate algorithm charges the battery at a fixed current rate up to a predetermined voltage. Once the predetermined voltage is achieved, the charger switches to a trickle or slower charge rate. The document relates thereby to a method charging the battery based on the users actual usage and not a predetermined taper voltage value. Therefore, the actual usage of the device and hence the battery charge pattern is monitored in order to determine the most efficient method to increase optimization of device use for the user. For this, a discharge level of the battery is compared to a predetermined discharge value. If the measured discharge level is greater than the predetermined discharge value, the battery is recharged to a first voltage of 4.1 V to optimize the battery performance for a high cycle life and lower capacity. If the measured discharge level is less than the predetermined discharge value, the battery is recharged to a fourth voltage of 4.2 V optimizing the battery performance for higher capacity and lower life cycle.

US 2002/0060554 A1 describes a battery charging system and a method for controlling the charging of a re-chargeable battery included in an intelligent battery by a charging device for which the charging condition can be set.

EP 1 538 724 A2 describes a charge control device for charging secondary batteries allowing to use an electronic apparatus for a long period by single charging initially, and capable of extending battery life in a long span.

It is the objective of the present invention that a novel charging algorithm be provided, to have the longest possible cycle life for the lithium ion battery.

It is another objective of the present invention that the full energy of the battery be utilized, to have the daily usage time to be maximized.

It is another objective of the present invention that the charging algorithm is flexible and smart, to adapt to the respective user's condition, to have the particular battery charging to be smart to well balance the individual user's need on maximum daily use time and maximum cycle life.

### SUMMARY OF THE INVENTION

Some abbreviations used in following description are listed and explained here to avoid any misunderstanding:
CC: constant current, usually the first charging stage of Li-ion battery by CC-CV charging
CV: constant voltage, usually the final charging stage of Li-ion battery by CC-CV charging. The CV used in this invention also represents the maximum charging voltage in one particular charging.
TV: Termination voltage, usually same as CV but for charging regime other then CC-CV the TV means the final termination voltage wherein the battery charging is stopped
EV: Ending voltage, the loaded or working voltage at the end of battery use before a new charging
RC: Remaining capacity. Un-discharged capacity at the end of battery use before a new charging, can be in percentage or milliamp-hour. It is in percentage in this description of the present invention.
SOC: State of charge, in percentage. It is the same meaning of RC in the present invention.
FC: Full capacity of a battery measured after being charged to its absolute highest possible charging voltage, i.e. 4.2V in this description of the present invention.

Lithium ion battery charging is relatively simple, in all rechargeable systems. Basically it controls the maximum charging voltage not to exceed an absolute highest charging voltage to prevent the cathode Li+ cations not being too much dumped out to anode so not to collapse the cathode material crystal structure. Before the maximum charging voltage or termination voltage reached, the battery can be charged with higher current in many different ways, and most commonly used is the CC-CV charging, by constant current to the maximum voltage and then keep at that voltage and continue the charging by reduced current. The CV voltage is usually set at 4.2V and recently with high demand of higher battery capacity the CV voltage has been improved to about 4.30V to 4.35V, for newest electronics since 2011. At higher charging voltage, the battery materials are much stressed by side reactions i.e. the materials oxidation, electrolyte decomposition, and other decays. So the battery cycle life is usually diminished on such higher charging voltage. With reduced CV voltage, or charge the battery at lower voltage, the cycle life can be extended but then the charged capacity is lower for each discharging.

The "cycle life" is defined at the cycle number at which the discharged capacity reaching certain level of the initial or new battery capacity, for example, at 80% of the initial capacity. When the electronic device designer selects the battery for his device, he would use the 80% of the initial battery capacity as the minimum capacity that can fulfill his electronics functioning needs. For rechargeable hearing aid designer, it means the battery needs to last for one day or 16-20 hours, at its 80% of initial capacity. As the hearing aid users always require stealth of the device, so a battery as small as possible is preferred, makes it always the designer's choice that the battery just last for one day- if longer, they will just select another smaller battery instead.

For such daily used and daily charged hearing aid system, cycle life actually is the same meaning of the days of use, usually required at 3-5 years or 1000 to 1500 cycles. Such high demand on cycle life gives the battery manufacturers great technical challenges. Besides the battery materials and battery design, a better charging algorithm would also help to have such long cycle life.

Prior art studies shown that the Li-ion battery cycle life is effected by the charging termination voltage, or CV voltage for CC-CV charging. The lower is the CV voltage the longer is the cycle life. We found that at 4.1V charging voltage the capacity is about 90% of 4.2V charging voltage. This suggests that lower charging voltage like 4.1V could be selected or used by the charger for longer battery life, while still the battery could deliver more than 80% of its initial capacity, which means, enough for the device to work for one day. Or at even lower voltage of 4.05V, of about 85% full capacity, still good for one day use.

A fixed CV voltage at 4.1V could be selected as above for longer cycle life. Then when the battery capacity falls into 80% of the initial capacity, instead of abandon the battery, we can actually just elevate the charging voltage higher up to 4.2V, it means up to 10% more capacity can be charged further into the battery, and then the battery will have 80%+8% about 88% of the initial capacity and again it could meet the daily use requirement, and it will have at least another several hundreds of cycle life before it falls to 80% capacity again.

Further to this, the voltage elevation could be in several steps such as 0.05V each step, equivalent to about 5% of the battery capacity, so it can increase the battery cycle life even more, by several of such steps of charging voltage elevation. We name this "stepped charging" by setting the CV voltage or charging termination voltage from lowest 4.05V and then elevate each 0.05V to 4.20V. For new chemistry Li-ion batteries, this can be up to highest 4.35V.

In such a way, with elevated CV or charging termination voltage, the battery life is extended even longer with just a lower fixed voltage, while the battery capacity is kept above 80% of its full capacity during all the cycles. More preferably, if we could know the energy or capacity needs of individual user each day, then we can charge the battery to just enough capacity which is of course lower voltage than highest so lower stress to the battery, to have the longest possible cycle life achieved.

The stepped charging can be realized by at least three approaches:

### User selected charging:

Leave the charging voltage selection to end user, by mounting a selection button on the electronic device or charger. Each press of the button will elevate the CV by 0.05V, up to the highest possible charging voltage. Mark this button as "More Energy", and tell the user only to press this button, if they find that the device could not work for one full day or battery low warning comes too early. Also this "More Energy" button of CV levels need to be pressed backwards, (De-elevation), in case wrongly elevated or no need of so much energy.

### Counted charging:

Set first 500 cycles to be charged to 4.10V, second 300 cycles to 4.15V, and third 200 cycles to 4.20V. The number can be adjusted with different battery sizes or designs, and the counter could be in the charger or in the device. Such stepped charging is used for battery testing but maybe not fit individual user's needs.

### Smart charging:

Measure and record the battery remaining capacity (RC) or state of charge (SOC) each day at the end of use. This can be achieved by measuring the battery working voltage or other electro-chemical parameters like measuring the battery impedance, open circuit voltage, or just fully discharge the battery measuring the RC. If the RC/SOC is still high, which means the user does not need this much energy. Then in the next charging, de-elevate the CV voltage so less capacity will be charged while still enough for one day use. If the RC/SOC is in a proper range, keep the charging CV same as last charging. If the RC/SOC is quite low or battery low warning triggered, then elevate the CV of next charging for more capacity so the next day use will be with enough capacity. Such process is dynamic and smart to fit the individual user's energy needs, and also the battery is least stressed by the lower CV charging so longer cycle life enabled.

### BRIEF DESCRIPTION OF THE DRAWINGS

FIG. 1 is the prior art correlation of battery cycle life, capacity, and charging voltage.
FIG. 2 is the illustration of battery cycle life by stepped charging (not reflecting the present invention).
FIG. 3 is the illustration of the smart charging algorithm according to the present invention.

### DETAILED DESCRIPTION OF THE PREFERRED EMBODIMENTS

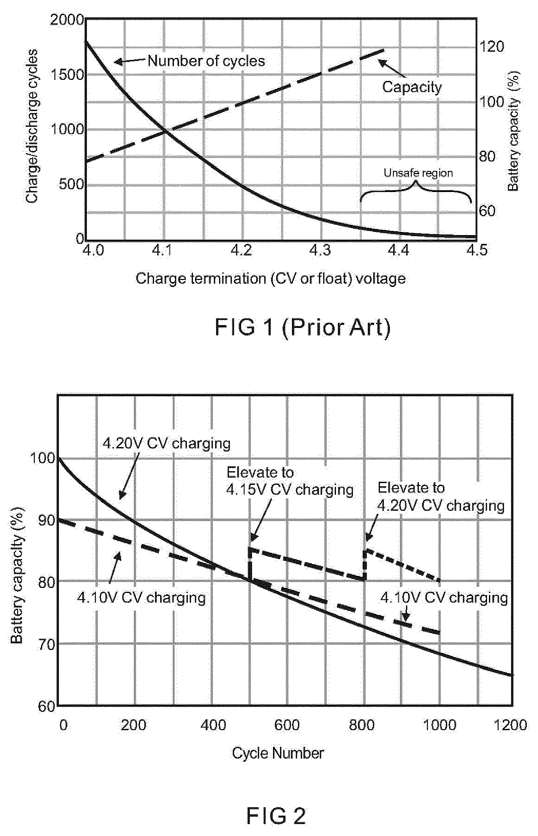

FIG. 1 shows the general correlation of cycle life, charged capacity, and charging voltage. At 4.1 V charging the cycle life is about 1000 cycles, while at 4.2V is about 500 cycles. We define the 4.2V capacity at 100% as full capacity (FC) for the convenience of following description. The "cycle life" here means the cycle number at which the capacity faded to its 80% of initial capacity, and the "initial capacity" means the respective first cycle capacity measured at respective charging voltage. At 4.2V, the initial capacity is measured at 4.2V charging so it is just the said FC, but at 4.1 V the "initial capacity" is the first cycle capacity of the battery being charged to 4.1V, so it is just 90% of FC.

By other words, at 4.1V charging cycles the cycle life is 1000 cycles, means the 1000th cycle discharged capacity is 80% of its first cycle capacity which is 90% of FC, actually is 72% of FC. This can be easily understood referring to FIG. 2 . But, if at 1000th cycle the charging voltage is at 4.2V, then it means 10% more capacity could be charged into the battery so then the discharged capacity could be 72%*110%= 79.2% of the FC. In this regard, the cycle life at 4.1 V is also about 80% of its FC, if the capacity is measured by charge it to 4.2V, though the earlier 999 cycles were charged to 4.1 V.

FIG. 2 further shows the capacity fading with cycle life and charging voltage. If by 4.2V charging, the battery will be at its 80% of FC after 500 cycles. If by 4.1 V charging, the battery is less stressed so it can last for 1000 cycles from 90% of FC to 72% of the FC, as the dotted line 4.1V CV charging. By charging to 4.1V, the discharged capacity will also be 80% of FC at 500th cycle, but the battery has the ability to deliver more capacity if charged at higher voltage at this point. Then by stepped charging concept after 500 cycles of 4.1V charging, we can elevate the charging voltage to 4.15V, it will have 5% more capacity charged at 501 th cycle i.e. 80%*105%=84% of FC, so it can cycle for another 300 cycles above 80% of FC. Then at 801 th cycle to elevate the charging voltage again to 4.20V, another 5% more capacity could be charged so another 200 cycles could be obtained. Totally the cycle life above 80% of FC is 1000 cycles with such three-steps charging at 4.10V/4/15V/4.20V, compared with 500 cycles of fixed 4.2V charging as the solid line of FIG. 2.

Those skilled in the art should know that these numbers and values are general illustrations just for understanding of the spirit of this method, and the actual cycle numbers, voltage and capacity values may vary with different battery design and/or cycle conditions.

The two simple methods of stepped charging which were described in the "Summary" i.e. user selected charging and counted charging are much easier to understand by referring to FIG. 2 as above described and not need to be with more details herein.

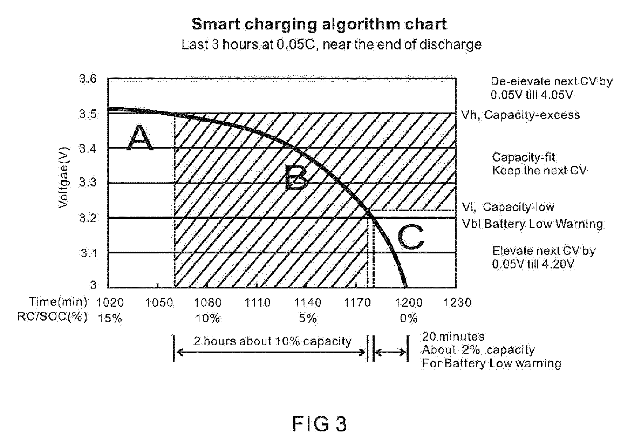

The third and most preferred method of stepped charging (which is the method of the present invention) is illustrated as FIG. 3, smart charging. The curved line is the last 3 hours discharging voltage of a general li-ion battery discharged at 20 hours rate or 0.05C, such as for hearing aid. The X coordinate is the time and also equivalent to RC/SOC in percentage. The Y coordinate is the battery working voltage or loaded voltage or closed circuit voltage. The discharge curve is quite inclined after 3.5V and it has good correlation between the RC/SOC and voltage, so the voltage could be used as an indicator of the RC/SOC.

Set the battery cut-off voltage at 3.0V, and set the battery low warning voltage Vbl at 3.20V, which leaves 20 minutes or 2% capacity before cut-off. Set the 3.50V as Vh, whereat the battery could still last for 2+ hours, means the battery capacity is more than enough. Set the 3.22V as VI, whereat the battery could last for a little more than 20 minutes. Measure and record the battery ending voltage (EV) at the end of each day after the device being used and/or put into the charger.

If the EV is in area A, not less than Vh of 3.50V, it means the device could still work for 2+ hours, or, 12%+ of RC/SOC. This user does not need so much capacity or capacity excess. Then in the next charging, de-elevate the CV down by 0.05V. This means the next charging will be about 5% less capacity, or 1 hour less of working time. It could to lowest 4.05V, to have a safe redundancy of capacity not further to 4.0V which may lead to lack of charging for the user. If the EV is in area B, between Vh and VI of 3.50V to 3.22V, it means the battery capacity is just fit the needs of this user. So keep the next charging parameter unchanged with same CV. If the EV is in area C, below VI of 3.22V, it means the battery could only last for less than 25 minutes the capacity is too low. So elevate the next charging CV by 0.05V for 5% more charged energy, until highest to 4.20V. This means the next charging will be with 1 hour more of working time. The reason for VI at 3.22V about 0.02V higher than Vbl is because in this way the EV has good chance to fall in between so the user would not be bothered by the battery low warning and the elevation of CV would be unaware by the user.

Besides the stepped charging concept, the other important considerations for a success smart charging are to set the correct thresholds of battery capacity excess/fit/low i.e. Vh and VI. And also it is important to set a proper voltage step for charging voltage adjustment. As per FIG. 3, we found the reasonable battery capacity-low threshold should be at about 2% of the full capacity, or about 20 minutes of using time. Capacity-excess threshold should be at about 10% to 12% of the full capacity, or about two hours of using time. 0.05V voltage adjustment step is also a good compromise of the IC measuring tolerance/accuracy and it represents about 5% of capacity change. The range between capacity excess/low is about 10% herein it is wide enough to have the EV voltage contained. Or if the thresholds are set too close, the adjustment of 5% will make the adjusted voltage coming in and out of the small capacity-fit range frequently. Other thresholds or step of voltage values could also be used without departing from the spirit of the present invention.

Such smart charging by simply measuring the EV as indicator of RC/SOC is easy and direct. Of course some other ways of measuring the battery RC/SOC such as by measuring its impedance, or open circuit voltage after the battery load off and rested, or even measuring the actual RC/SOC by discharge the battery to its cut-off voltage, could also be used. With the measured and recorded RC/SOC, the adjustment of next charging CV could be made, based on the CV of last charging, as above described. So in general we would prefer to use the RC/SOC in percentage to describe the battery status at the end of last discharging instead of using the EV or other indicators of RC/SOC. So if by percentage of RC/SOC other than by EV, we can describe the FIG. 3 in this way: At the end of each day, if battery RC/SOC is less than 2%, then increase 5% capacity in next charging. If battery RC/SOC is more than 12%, decrease 5% capacity in next charging. If battery RC/SOC is in between, keep the same setting in next charging.

Some other devices or other battery designs may have different cut-off voltage other than 3.0V of FIG. 3, then to use the above percentage concept it would be easier to be described. It can just simply define the capacity at the cut-off voltage as 0%, and set 2% capacity as capacity-low threshold, set 12% capacity as capacity-excess threshold. Then if to use EV as the RC/SOC indicator, which might be the easiest to be measured, just find the correlated EV on discharge curve at Y coordinate, by above percentages of RC/SOC or using time at X coordinate.

Possible issues for such smart charging could be that the user's daily battery consumption is too much variable. If the user stop the device earlier than full day so the EV was higher than capacity-excess threshold, such as the user is testing the HA or it was weekend the user does not need to have the device powered-on for full day, then the charger may de-elevate the CV unnecessarily so next day the user maybe bothered by the battery low warning or short of using time. Other scenarios such as the user need the maximum capacity to be charged for a long working day not just by one elevated CV step of 5% more capacity may also be an issue.

These are also considered in the present invention by setting the lowest charging voltage to 4.05V or 85% of the full capacity so the minimum charged capacity is not too low. Also the charger could has a counter inside, that only de-elevate the CV in next charging if three consecutive EV values that not less than capacity-excess were measured. This will smooth at least two early-stops of the device and fit the weekend scenario. For power-hungry users we would use the "max-up" strategy which means if the EV below capacity-low is measured, then in the next charging just elevate the CV to its highest possible voltage i.e. directly to 4.20V, not by just a single 0.05V step of elevation. These are all user-friendly designs to have them least bothered.

### Example

Li-ion button cell Z23 batteries at diameter 7.8mm height 5.3mm were made at 23mAh 3.7V, and by counted stepped charging at 0.5C CC-CV charging and 0.5C discharging, CV charging starting from 4.05V and then elevated respectively to 4.10V/4.15V/4.20V when 80% of FC is reached, cycle life is found to be at 1500+ cycles above 18mAh, compared with 800+ cycles of fixed 4.2V charging to the same capacity.

It will be apparent to those skilled in the art that various modifications and variation can be made in the present invention. Thus, it is intended that the present invention covers the modifications and variations of this invention provided they come within the scope of the appended claims and their equivalents.

## Claims

1. A charging algorithm of lithium ion battery comprises:
at least one charging stage before the battery voltage reached a maximum charging voltage;
at least one final charging stage after the battery voltage reached said maximum charging voltage, said final charging stage can be lasting for a period of time or can be transient;
said maximum charging voltage in each cycle is not greater than an absolute highest charging voltage of respective battery design or chemistry;
said maximum charging voltage in each cycle is not less than a lowest charging voltage;
state of charge at the end of last discharging is measured and recorded;
wherein said maximum charging voltage for a new charging is variable and determined by said state of charge at the end of said last discharging
**characterized in that**
said maximum charging voltage of last charging is recorded; and **in that**
said maximum charging voltage for a new charging is further determined by said maximum charging voltage of said last charging,
wherein two thresholds of state of charge are preset, wherein one is at a higher state of charge level named capacity-excess, and one is at a lower state of charge level named capacity-low, wherein said state of charge at the end of said last discharging can be measured or determined by any one of: battery impedance, battery loaded voltage or working voltage, battery open circuit voltage, directly discharging of the battery and measuring the capacity,
wherein if said state of charge at the end of said last discharging is not less than said higher threshold of capacity-excess, then in the next charging de-elevate said maximum charging voltage to be lower than said last charging but not lower than said lowest charging voltage,
wherein if said state of charge at the end of said last discharging is less than said lower threshold of capacity-low, then in the next charging elevate said maximum charging voltage to be greater than said last charging but not greater than said absolute highest charging voltage,
wherein if said state of charge at the end of said last discharging is less than said higher threshold of capacity-excess and not less than said lower threshold of capacity-low, then in the next charging use the same maximum charging voltage as said last charging.

2. The charging algorithm of claim 1, only if consecutive three values of measuring of said state of charge at the end of said last discharging are all not less than said higher threshold of capacity-excess, then in the next charging de-elevate said maximum charging voltage to be lower than said last charging but not lower than said lowest charging voltage.

3. The charging algorithm of claim 1, if said state of charge at the end of said last discharging is less than said lower threshold of capacity-low, then in the next charging elevate said maximum charging voltage to said absolute highest charging voltage.

4. The charging algorithm of claim 1, said lower threshold of capacity-low is in between of 1 % to 5%.

5. The charging algorithm of claim 1, said higher threshold of capacity-excess is in between of 5% to 20%.

## Patentansprüche

1. Ladealgorithmus für Lithium-Ionen-Batterie, umfassend:
mindestens eine Ladephase, bevor die Batteriespannung eine maximale Ladespannung erreicht hat;
mindestens eine finale Ladephase, nachdem die Batteriespannung die maximale Ladespannung erreicht hat, wobei die finale Ladephase einen Zeitraum andauern oder vorübergehend sein kann;
wobei die maximale Ladespannung in jedem Zyklus nicht höher als eine absolute maximale Ladespannung des/der jeweiligen Batteriedesigns oder - chemie ist;
wobei die maximale Ladespannung in jedem Zyklus nicht höher ist als eine minimale Ladespannung;
wobei der Ladezustand am Ende der letzten Entladung gemessen und aufgezeichnet wird;
wobei die maximale Ladespannung für eine neu Aufladung veränderbar ist und durch den Ladezustand am Ende der letzten Entladung ermittelt wird
**dadurch gekennzeichnet, dass**
die maximale Ladespannung der letzten Aufladung aufgezeichnet wird; und dadurch, dass
die maximale Ladespannung für eine neue Aufladung ferner durch die maximale Ladespannung der letzten Aufladung ermittelt wird,
wobei zwei Schwellen des Ladezustands voreingestellt sind, wobei eine an einer höheren Stufe des Ladezustands namens Kapazitätsüberschuss liegt und eine an einer niedrigeren Stufe des Ladezustands namens Niedrigkapazität liegt, wobei der Ladezustand am Ende der Entladung durch eine(s) der folgenden Werte/Verfahren gemessen oder ermittelt werden kann: Batterieimpedanz, geladene Batteriespannung oder Arbeitsspannung, Batterie-Betriebsspannung bei offenem Schaltkreis, direkte Entladung der Batterie und
Messen der Kapazität,
wobei, wenn der Ladezustand am Ende der letzten Entladung nicht kleiner ist als die Kapazitätsüberschuss-Obergrenze, die maximale Ladespannung bei der nächsten Aufladung auf einen niedrigeren Wert als bei der letzten Aufladung,
aber nicht niedriger als die minimale Ladespannung, gesenkt werden soll,
wobei, wenn der Ladezustand am Ende der letzten Entladung kleiner ist als die Niedrigkapazitäts-Untergrenze, die maximale Ladespannung bei der nächsten Aufladung auf einen höheren Wert als bei der letzten Aufladung, aber nicht höher als die absolute maximale Ladespannung, erhöht werden soll,
wobei, wenn der Ladezustand am Ende der letzten Entladung kleiner ist als die Kapazitätsüberschuss-Obergrenze und nicht kleiner ist als die Niedrigkapazitäts-Untergrenze, die selbe maximale Ladespannung wie bei der letzten Aufladung verwendet werden soll.

2. Ladealgorithmus nach Anspruch 1, wobei nur, wenn drei aufeinander folgende Messwerte für den Ladezustand am Ende der letzten Entladung alle nicht kleiner sind als die Kapazitätsüberschuss-Obergrenze, die maximale Ladespannung bei der nächsten Aufladung auf einen niedrigeren Wert als bei der letzten Aufladung, aber nicht niedriger als die minimale Ladespannung, gesenkt werden soll.

3. Ladealgorithmus nach Anspruch 1, wobei, wenn der Ladezustand am Ende der letzten Entladung kleiner ist als die Niedrigkapazitäts-Untergrenze, die maximale Ladespannung bei der nächsten Aufladung auf die absolute maximale Ladespannung erhöht werden soll.

4. Ladealgorithmus nach Anspruch 1, wobei die Niedrigkapazitäts-Untergrenze zwischen 1% und 5% liegt.

5. Ladealgorithmus nach Anspruch 1, wobei die Kapazitätsüberschuss-Obergrenze zwischen 5% und 20% liegt.

## Revendications

1. Algorithme de charge de batterie lithium-ion, comprenant :
au moins une phase de charge avant que la tension de la batterie n'atteigne une tension de charge maximale ;
au moins une phase de charge finale après que la tension de batterie a atteint ladite tension de charge maximale, ladite phase de charge finale pouvant durer pendant une période de temps ou pouvant être transitoire ;
ladite tension de charge maximale par cycle n'est pas supérieure à un tension de charge absolument maximale correspondant à la conception respective ou à la configuration chimique de la batterie ;
ladite tension de charge maximale par cycle n'n'est pas inférieure à une tension de charge minimale ;
l'état de charge à la fin de la dernière décharge est mesuré et enregistré ;
dans lequel ladite tension de charge maximale pour une nouvelle charge est variable et déterminée par ledit état de charge à la fin de ladite dernière décharge
**caractérisé en ce que**
ladite tension de charge maximale de la dernière charge est enregistrée ; et **en ce que**
ladite tension de charge maximale pour une nouvelle charge est en outre déterminée par ladite tension de charge maximale de ladite dernière charge,
dans lequel deux seuils de l'état de charge sont préréglées, dans lequel un est à un niveau supérieur d'état de charge appelé excès de capacité, et un est à un niveau inférieur d'état de charge appelé seuil de faible capacité, étant donné que ledit état de charge à la fin de ladite dernière décharge peut être mesuré ou déterminé par l'une quelconque des valeurs/méthodes suivantes : impédance de batterie, tension chargée ou tension de travail de batterie, tension de circuit ouvert de batterie, décharge directe de la batterie et mesure de la capacité,
dans lequel, si ledit état de charge à la fin de ladite dernière décharge n'est pas inférieur audit seuil supérieur d'excès de capacité, réduire lors de la prochaine décharge ladite tension de charge maximale de manière à ce qu'elle soit inférieure à ladite dernière charge, mais pas inférieure à ladite tension de charge minimale,
dans lequel, si ledit état de charge à la fin de ladite dernière décharge est inférieur audit seuil inférieur de faible capacité, augmenter lors de la prochaine charge ladite tension de charge maximale de manière à ce qu'elle soit supérieure à ladite dernière charge, mais pas supérieure à ladite tension de charge maximale absolue,
dans lequel, si ledit état de charge à la fin de ladite dernière décharge est inférieur audit seuil supérieur d'excès de capacité et pas inférieur audit seuil inférieur de faible capacité, utiliser lors de la prochaine charge la même tension de charge maximale que ladite dernière charge.

2. Algorithme de charge selon la revendication 1, seulement si trois valeurs de mesure consécutives de l'état de charge à la fin de ladite dernière décharge ne sont pas toutes inférieures audit seuil supérieur d'excès de capacité, réduire lors de la prochaine décharge ladite tension de charge maximale de manière à ce qu'elle soit inférieure à ladite dernière charge, mais pas inférieure à ladite tension de charge minimale.

3. Algorithme de charge selon la revendication 1, si ledit état de charge à la fin de ladite dernière décharge est inférieur audit seuil inférieur de faible capacité, augmenter lors de la prochaine charge ladite tension de charge maximale à ladite tension de charge maximale absolue.

4. Algorithme de charge selon la revendication 1, dans lequel le seuil inférieur de faible capacité est situé entre 1 % et 5 %.

5. Algorithme de charge selon la revendication 1, dans lequel le seuil supérieur d'excès de capacité est situé entre 5 % et 20 %.
